# EUROPEAN PATENT SPECIFICATION

(11) **EP 2 134 037 B1**
(45) Date of publication and mention of the grant of the patent: **11.05.2011**
(21) Application number: 08305254.8
(22) Date of filing: 12.06.2008
(51) Int. Cl.: H04L 12/56

(54) **Method and apparatus for scheduling data packet flows**
Verfahren und Vorrichtung zur Planung von Datenpaketströmen
Procédé et appareil de planification de flux de paquets de données

(43) Date of publication of application: 16.12.2009
(73) Proprietor: Alcatel Lucent, 75008 Paris (FR)
(72) Inventor: Popa, Daniel, 92240 Malakoff (FR); Post, Georg, 91620 La Ville du Bois (FR)
(74) Representative: Urlichs, Stefan

(56) References cited:
- WO-A-03/088605
- WO-A-2004/057808
- WO-A-2005/104452
- CHRISTENSEN K J ET AL: "An evolution to crossbar switches with virtual output queuing and buffered cross points" IEEE NETWORK, IEEE SERVICE CENTER, NEW YORK, NY, US, vol. 17, no. 5, 1 September 2003 (2003-09-01), pages 48-56, XP011101799 ISSN: 0890-8044

## Description

### Field of the Invention

The invention relates to the field of telecommunications and more particularly to a method of scheduling flows of data packets between input and output line cards of a switching node and a switching node implementing the same.

### Background of the Invention

WO 03/088602 describes a method of multiplexing a number of synchronous and asynchronous traffic flows onto a single line. The problem behind is how the limited but constant bandwidth of the line can be fairly distributed over a given mixture of synchronous and asynchronous traffic flows. This is achieved by buffering each traffic flow in its own queue, where all queues are served by a common server. The server visits the queues in a cyclic order, one after the other and grants to each queue a certain service time for transmission at each visit.

In packet switching nodes, the scheduling of packet data flows requires information exchanges between inputs and outputs and a scheduling algorithm processing to share the bandwidth available at output among competing inputs. This is also referred to as output contention resolution. The scheduling procedure should provide a maximal matching between the bandwidth requested at input line cards and the bandwidth available at output line cards.

This input-output bandwidth matching can roughly be simplified by dividing it into two levels: (i) sharing the bandwidth of on output among competing inputs, and (ii) sharing the bandwidth of an input/output among competing individual data packet flows. The mechanisms deployed at each level have different goals. The former focuses on optimizing the switch fabric throughput and delay performance. The latter focuses on the isolation and differentiation of individual flows.

The isolation and differentiation of individual data packet flows is achieved by implementing scheduling algorithms optimized for priority, fairness, or other performance metric. The issue that challenges the development of efficient packet switching systems is the design of a scheduling scheme for a packet switch fabric, which efficiently shares the output bandwidth among competing inputs.

A packet-switching node typically contains a central switching device, called fabric or matrix, and a number of line cards as input and as output stages. Such line cards may offer data rates (bandwidths) of 10 Gbit/s or more. Currently, line cards with a capacity of 100 Gbit/s are being developed.

A scheduling unit for a packet-switch fabric matches the transfer bandwidth through the switch fabric of all input to all output stages, with a granularity of an integer number of data cells. A cell may be a unit of digital data, for example 64 bytes.

In known systems, the fabric scheduling is synchronous and can be implemented using centralized or distributed schemes. During every cycle, the scheduling procedure functions as follows. Each input scheduler submits request signals to each of the output schedulers indicating the quantity of data addressed/destined to the appropriate output. Each output collects request signals from all inputs, among which the inputs with active requests are granted according to some priority order. As a result, a grant signal is sent back to acknowledge the amount of data each of the active inputs can forward to the output. When a centralized scheduler is used, a scheduling device intercepts the grants and re-adjusts them (e.g., by delaying some of them) to new "final" grants. The "final" grants are then sent to the appropriate line card schedulers. The grants are used at the inputs to dispatch bandwidth among competing flows. The maximum number of allowed data (e.g., cells) per scheduling cycle and per pair of input/output is equal to the link capacity between the corresponding input/output and the switch fabric.

The scheduling schemes in packet switching systems must operate within the time-length of the smallest packet crossing the system. For IP network applications where the smallest IP packet has a size of 64 Bytes (e.g., the TCP/IP ACK packet), the time-length of such packet is of 32 nanoseconds (ns) at 10 Gbit/s, 8 ns at 40 Gbit/s and 3,2 ns at 100 Gbit/s. As hardware speeds are scaling more slowly than line card speeds, it becomes impractical to deploy maximal matching algorithms to schedule at the granularity of the smallest packet size for line speeds higher than 10 Gbit/s. Moreover, a higher frequency of input-to-output bandwidth matching requires a higher signaling overhead between input and output line cards.

In this regard, the next generation of packet switches must incorporate scheduling methods that work at a rate slower than the arrival rate of the smallest packets in the system.

Envelope-based scheduling methods have been proposed to dissociate the fabric scheduling rate from the arrival rate of the smallest packet. In such an approach, a scheduler attempts to schedule as many packets as possible in fixed-time intervals, where each interval is referred to as an envelope time. The scheduler waits for an envelope at the head of an input buffer to fill up before taking it into consideration for scheduling. This represents a major drawback as such approaches can lead to poor delay characteristics under low and unbalanced traffic load conditions. Moreover, as packets arriving at input ports have variable size, an envelope may be left partially filled because of the mismatch between fixed-size envelopes and variable-length packets. As a result, when an envelope contains less useful bits than it could accommodate, the bandwidth is wasted and the switch throughput can decrease significantly.

A weight-based scheduling method such as described in US-7065046 has been derived from the basic envelope scheduling in order to provide better delay characteristics. Contrary to the conventional envelope scheduling, the weight-based scheduling approach considers non-empty (i.e., partially filled) envelopes as candidates for selection. Here, the packets waiting in head of input buffers/queues have a delay weight and in addition a length weight is associated to each buffer. All active (i.e., non-empty) input buffers/queues maintain a delay counter that is increased in each cycle of scheduling and a queue length counter that is increased each time a new packet arrives. The fabric selects for scheduling the envelopes that have a delay counter larger than a threshold T or the envelopes with largest composite weights. A composite weight represents a linear combination of delay and queue length weights. This scheme achieves better delay characteristics than the conventional envelope scheduling, at the expense of some bandwidth waste. However, the choice of the envelope size is not an easy task. On the one hand, a smaller size of envelopes can guarantee good packet delay characteristics, at the expense of an increased scheduling rate. On the other hand, a larger size of envelopes will decrease the scheduling rate, at the expense of an increase of the packet delay.

### Summary of the Invention

It is an object of the present invention to provide a scheduling method and related switching node that decreases the scheduling frequency, and thus the amount of information exchanged between inputs and outputs and that uses the switching fabric capacity more efficiently.

For that purpose a hybrid scheduling for flows of data packets between input and output line cards of a switching node is implemented, which combines a synchronous scheduling between all pairs of input and output line cards with an asynchronous scheduling which is activated upon request by an input line card as a function of traffic load conditions in a queue of the corresponding input line card.

In particular, a switching node for switching of packet data is provided, which has input line cards and output line cards. Each input line card has a number of virtual output queues and each output line card has a number of real output queues. A switch matrix controllably transfers data entities from the input line cards to the output line cards under the control of a scheduling system, which schedules the transfer of the data packets from the input line cards to the output line cards through the switch matrix. The scheduling system synchronously sends grants at a predefined time interval to all input line cards for transmitting data entities to output line cards and asynchronously sends additional grants to individual input line cards in dependence of a traffic load condition in any of the virtual output queues of the respective input line card.

The invention has several advantages. First, it allows the scheduling procedure to be decoupled from the time-length of the smallest packet in the system. Second, the hybrid scheduling allows to significantly decrease the scheduling rate and thus to use maximal matching algorithms. As a result, the signaling overhead between input and output line cards, which is intimately related to the scheduling rate, is considerably reduced. Third, the combination of synchronous and asynchronous scheduling permits the efficient scheduling of non-elastic (e.g., constant bit-rate) and elastic (e.g., variable bit-rate) data flows, with the required Quality of Service (QoS). On the one hand, the hybrid scheduling method allows to switch constant-bit-rate flows as fast as a TDM cross-connect. On the other hand, the variable bit-rote ports of elastic traffic flows are fully taken into account through the asynchronous component of the hybrid scheduling method, which efficiently tracks the traffic variation and quickly modulates the more slowly varying parts of the synchronous allocation.

### Brief Description of the Drawings

Other aspects and advantages will become apparent in the following description made with reference to the appended figures, in which:
- figure 1: shows an exemplary switching node with input and output line cards and a switch matrix;
- figure 2: shows the operational principles of virtual queues;
- figure 3: shows data flow from one of the input line cards via the switch matrix to the output line cards;
- figure 4: shows data flow to one of the output line cards via the switch matrix from the input line cards;
- figure 5: shows a message flow from an input scheduler to an output scheduler; and
- figure 6: shows a time pattern of scheduling events

### Detailed Description of the Invention

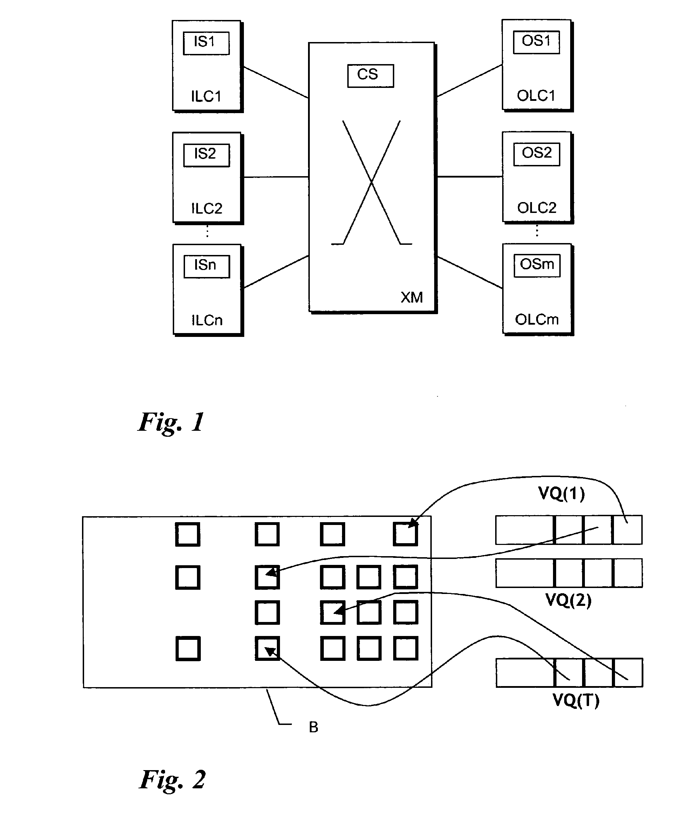

The present invention relates to a scheduling method of data packet flows between input and output line cards of a switching node to optimize bandwidth grants between said line cards. Figure 1 shows a switching node with n input line cards ILC1-ILCn and m output line cards OLC1-OLCm, which are interconnected via a packet switch matrix XM. The switch matrix XM can use crossbar or shared-memory architecture. In the preferred embodiment, the switch matrix XM uses shared-memory architecture.

Each input line card has a scheduler ISi and each output line card has a scheduler OSi. A further central scheduler CS is provided for the switch matrix. The function of the schedulers will be explained later.

The switch matrix XM is time-slotted, i.e., designed for cyclic switching. During each switching cycle, a number of cells enter the switch matrix from the input line cards ILC1-ILCn and the same number of cells leaves the switch matrix XM towards the output line cards OLC1-OLCm.

Variable-size packets are segmented in fixed-size cells at the input line cards ILC1-ILCn. The resulting cells are forwarded across the switch matrix XM and reassembled at the output line cards OLC1-OLCm.

The input line cards ILC1-ILCn and output line cards OLC1-OLCm also contain queues. In particular, each output line-card OLCi contains a number of real output queues (ROQ). At an output line card, cells from input line cards are stored into ROQs until the cell carrying the last slice from a particular packet arrives. Then, the packet is reassembled and scheduled for transmission.

Queuing in the input line cards ILC1-ILCn is organized into virtual output queues (VOQ), where VOQs are the result of the logical organization of a shared buffer B. Pointers to data stored in the shared-buffer are used to organize the shared buffer content. This is shown schematically in figure 2. Virtual queues VQ(1), VQ(2), to VQ(T) contain pointers to data elements stored in a shared buffer B. Each data element represents one cell.

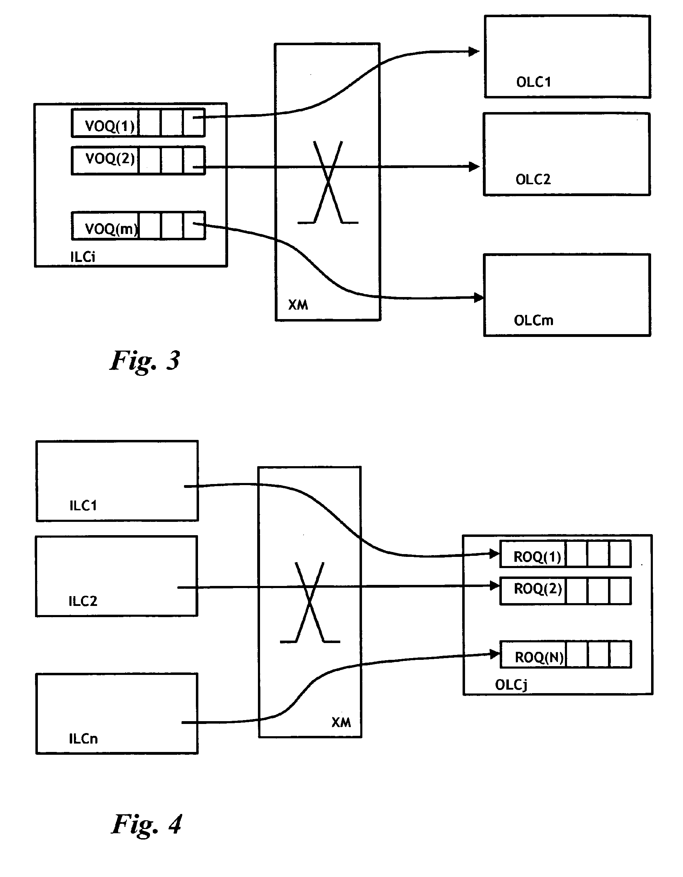

In the preferred embodiment, the switch has n input and m output line cards, whereby the number m of output line cards can (but does not necessarily needs to) equal the number n of input line cards. Figure 3 shows by way of example an arbitrary one of the n input line cards ILCi connected via the switch matrix XM to the m output line cards OLC1-OLCm.

Each input line card ILCi (i ∈ [1,n]) uses shared buffers organized as virtual output queues (VOQ) to avoid the Head of Line blocking phenomenon. Each input line card has m virtual output queues VOQ(1) - VOQ(m) corresponding to the number m of output line cards. A packet with output destination OLCj (j ∈ [1,m]), entering the switching node at input line card i (i ∈ [1,n]) is segmented into fixed-size cells and the resulting cells are "stored" in the corresponding virtual output queue VOQ(j). Each VOQ(j) contains only data destined to the output OLCj.

Figure 4 shows the exemplary output line card OLCj connected via switch matrix XM to the n input line cards ILC1-ILCn. Each output line card OLCj has a number of n real output queues ROQ(i) corresponding to the number n of input line cards ILC1-ILCn. All cells with the same input address I, i.e. cells coming from the same input line card ILCi are stored in ROQ(i). Hence, output queue ROQ(i) contains only data coming from only the input line card ILCi.

In the following, it will be explained how cells are transferred from inputs to outputs. The cell switching requires a scheduling mechanism, which determines which cell (or group of cells) from which input is allowed to be transferred to its corresponding output. As mentioned earlier, this is implemented in the preferred embodiment by a system of schedulers. In particular, each input line card ILC1-ILCn has a corresponding input scheduler IS1-Isn, respectively, and each output line card OLC1-OLCm has a corresponding output scheduler OS1-OSm, respectively. In addition, a central scheduler CS, also referred to as matrix scheduler, is provided at the switch matrix XM.

Input schedulers IS1-ISn, output schedulers OS1-OSn and central scheduler CS communicate with each other in such a way that each input scheduler IS1-ISn can send a request to each output scheduler OS1-OSn and each output scheduler OS1-OSn can send via the central scheduler CS a grant to each input scheduler IS1-ISn. The central scheduler CS collects grants from all output schedulers OS1-OSm and constraints them to new grants, called final grants.

Without loss of generality, in the following lines reference will be made to a single input line card ILCi and to a single output line card OLCj. The mode of operation is the same for all input schedulers and for all output schedulers, respectively.

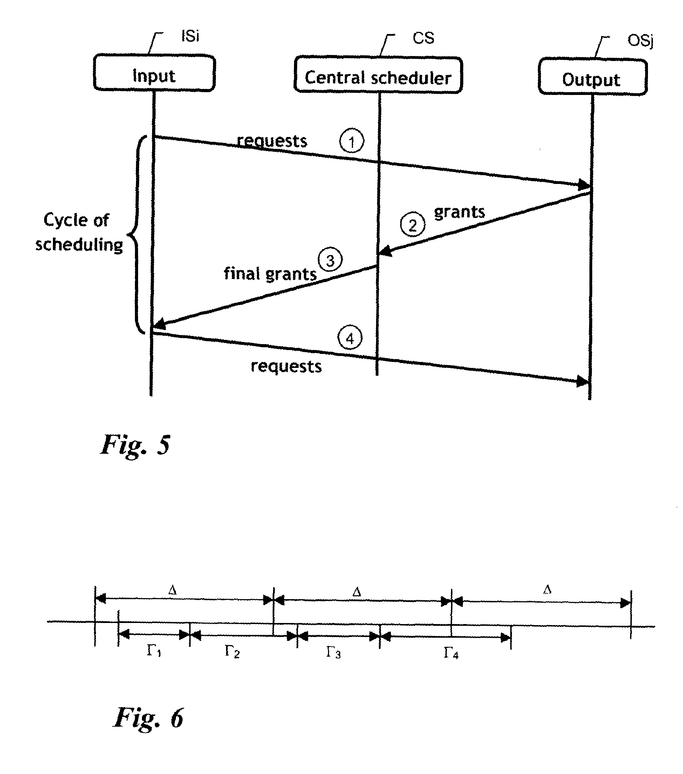

Figure 5 illustrates the scheduling procedure for the packet switch matrix and, in particular, the signaling message flows exchanged between input scheduler ISi (i.e., the one of the input line card ILCi), output scheduler OSj (i.e., the one of the output line cards OLCj) and central scheduler CS. Input scheduler ISi sends a request 1 to output scheduler OSj requesting to transmit a certain number of data cells addressed to the output line card OLCj and thus waiting in the corresponding virtual output queue VOQ(j) associated with output line card OLCj.

The output scheduler OSj replies with a grant signal 2, indicating how many of the waiting data cells are allowed to be transferred. This requests is intercepted by the central scheduler CS. The central scheduler CS uses grants provided by output scheduler to compute a maximal matching between input and output. The central scheduler CS either forwards the grants, as received from output (if there are no bandwidth contentions with other inputs), or delays some of them. Afterwards, the central scheduler CS sends the final grant signal (3) to the appropriate scheduler. In the next switching cycle, a new request 4 can be sent.

In other words, the purpose of the central scheduler is to resolve any potential contentions between competing line cards in order not to overload or block the matrix at a given switching cycle. In an alternative implementation, the central scheduler CS can directly receive the request signal from ISi and the preliminary grant signal (buffer availability or backpressure) from Osj. In this case, the OLCj does not need the full request message.

In yet a further variant, the scheduling system can contain input schedulers designed to generate a bandwidth request matrix, output schedulers designed to calculate a granted bandwidth matrix from the bandwidth request matrix and/or from the output-queue status, and centralized scheduler designed to calculate a final granted matrix from the (request and the) grant matrix. The bandwidth request matrix comprises a number of rows and columns corresponding to the number of input and outputs, respectively, which are connected to the switch matrix. The input schedulers collect the bandwidth requests from the inputs and send them to the output schedulers at the outputs, which in turn generate a granted bandwidth matrix based on the requested bandwidth matrix. The central scheduler intercepts the granted bandwidth matrix and generates, e.g., by readjusting/delaying some of grants, a final granted bandwidth matrix based on the granted bandwidth matrix. Afterwards, the final granted bandwidth matrix is sent to the input and output schedulers. The input schedulers use the granted bandwidth information to dispatch bandwidth among competing input flows.

Synchronous or cyclic scheduling is a periodic process wherein all line cards rely upon a common scheduling clock. During every scheduling cycle, each input scheduler submits a request signal to each of the m output schedulers, indicating the quantity of information destined to the corresponding output line card. Each output scheduler collects n signals, among which the inputs with active requests are granted according to some priority order. As a result, a grant signal is send back to acknowledge the amount of data each of the active inputs can forward to the output. The central scheduler intercepts all the grants signals and re-adjust them, e.g., by delaying some of them, to new final grants. Afterwards, final grant signals are sent to each of the active input line cards and to all output line cards. The input schedulers use the final grants information to dispatch bandwidth granted by outputs among competing flows.

In other words, the synchronous scheduling procedure takes place at the same time at all input schedulers and all output schedulers, as well as at the centralized scheduler. Therefore, the synchronous scheduling takes place independent of the state of virtual output queues in the input line cards.

Further to this, each input line card ILCi maintains for each VOQ(i) a byte or cell counter. This counter reflects the amount of data currently stored in the VOQ(i). In particular, each input scheduler ISi collects the state of all active VOQs. Active VOQ means that this VOQ that has a counter value greater than 0; i.e., the VOQ(i) is not empty. Based on the degree of queue occupancy and some priority order, the scheduler ISi sends requests to the output schedulers. For instance a request from an active VOQ(i) may represent the number of bytes or cells stored in each VOQ(i), i.e., the amount of data destined to output j.

According to an idea of the present invention, this synchronous scheduling is complemented by an adaptive mechanism of asynchronous scheduling. The principle of this asynchronous scheduling is as follows: Each VOQ(i) on any input line card has associated a maximum threshold (expressed in numbers of bytes or cells). When the quantity of data stored in a VOQ(i) at input line card ILCi exceeds the maximum threshold, the scheduler ISi located at input line card ILCi sends a request signal to the output line card OLCᵢ to request for more bandwidth.

In the preferred embodiment, there are two thresholds, namely a maximum and minimum threshold. When the quantity of data stored in a VOQ(j) on input line card ILCi drops below the minimum threshold, the scheduler ISi on input line card ILCi sends a negative request signal to the scheduler OSj on the output line card OLj to request for "less" bandwidth. For instance, a negative request could indicate that part of the already granted bandwidth is no more needed and can be redistributed to other input line cards.

A further advantageous improvement is to introduce a time-out mechanism. When the VOQ(i) on input line card ILCi stays empty for a period of time larger than a certain time threshold, the scheduler ISi on input line card ILCi sends a request signal to scheduler OSi on the output line card OLCj to request for only a minimum guaranteed bandwidth.

As each input line card ILCi may have different traffic load conditions, the asynchronous scheduling will occur at different instants in time at each of the inputs. In particular, each asynchronous scheduling event at a particular input line card ILCi generates a scheduling event at a particular output line card OLCj, and a scheduling event at the central scheduler CS. Therefore, the asynchronous scheduling procedure occurs as a function of the state of virtual queues at the input line cards.

In another (symmetric) embodiment, each output line card OLCj can also generate asynchronous positive or negative grant events based on the state of its real output queues. Negative grants are what we call backpressure events. In such a system, the central scheduler CS may collect all asynchronous events, in order to compute final grant values.

Hence, in accordance with the present invention, a hybrid scheduling is implemented which combines synchronous (cyclic) scheduling and asynchronous scheduling. The synchronous scheduling guarantees an average bandwidth for all pairs of input and output line cards, while the asynchronous scheduling "tracks" the traffic bit-rate variation - by surveying the state of each VOQ - and guarantees a minimum bandwidth for all pairs of input and output line cards.

If a particular VOQ(i) at input line card ILCi fills up continuously and exceeds the maximum threshold, the scheduler ISi of the corresponding input line card ILCi requests for additional bandwidth (with respect to the average bandwidth granted by the synchronous scheduling) for the VOQi that exceeds the threshold.

Conversely, if a particular VOQi at the input line card ILCi continuously empties and drops below the minimum threshold, the scheduler ISi of the corresponding input line card ILCi informs the scheduler OSi of the appropriate output line card OLCj that the quantity of bandwidth granted (with respect to the average bandwidth granted by the synchronous scheduling) can be decreased to the average value. Additionally, if VOQi stays empty for a period of time that exceeds a given time threshold, the scheduler ISi of the input line card ILCi informs the appropriate scheduler OSi of the output line card OLCj (and/or the CS) that the quantity of granted bandwidth can be further decreased to a minimum guaranteed bandwidth.

The cycle of the synchronous scheduling can be larger than the time-length of the smallest packet circulating across the system. This happens because the synchronous scheduling procedure matches input-to-output bandwidth based on the average value of bandwidth requested at input line cards which slowly varies as a function of time.

In the preferred embodiment, the following parameters are specified:
- An average and a minimum bandwidth for all pairs of inputs and outputs.
- A maximum and a minimum threshold.
- A time window per VOQ for the time-out mechanism.

The figures 6 shows the timing of the synchronous and asynchronous scheduling events. The synchronous and asynchronous scheduling events occurs as shown in Figure 5. A scheduling event triggers a sequence of signals that starts with a request and ends with a final grant. The clock phases of the synchronous scheduling events are identical in all input line cards. The basic clock cycle might be, for example, Δ = 500 µs.

The asynchronous scheduling occurs as a function of the state of virtual queues at input line card ILCi. Delta (Δ) is the fixed interval for synchronous scheduling. Gamma (Γi) is the time-interval between two asynchronous scheduling events. In order to limit the signaling bandwidth, Gama can have a lower bound, as will be explained later.

Asynchronous scheduling is a "one-shot" process that does not rely on a common clock schedule. There are the same steps as in synchronous scheduling, but asynchronous signalling takes place only for certain pair of line cards.

Asynchronous scheduling is combined with synchronous scheduling, and is activated upon request by an input line card as a function of traffic load conditions in any of the queues of the input line card.

Asynchronously allocated bandwidth manages the quickly time-varying parts, e.g. the bursts, of the traffic flows. According to figure 6, Gamma (Γᵢ) is the (nonuniform) length between two asynchronous scheduling events.

A minimum bandwidth-threshold can be set up between any pair of input (i) and output (j) line cards. Hence, the synchronous scheduling guarantees that a *minimum* bandwidth is continuously granted between all pairs of input and output line cards. The minimum bandwidth threshold guarantees that a certain amount of data, which arrives between two consecutive synchronous scheduling events or between a synchronous and an asynchronous scheduling event, is immediately granted. In addition, the synchronous grants can specify a precise timing pattern for the cells of the data flows between input line card ILCi and output line card OLCj, such that the plurality of scheduled flows share the switch fabric in a time-division multiplex.

According to a first embodiment, synchronous scheduling guarantees that a minimum bandwidth is continuously granted between all pairs of input and output line cards. Therefore, it guarantees that a certain amount of data, which arrives between two consecutive synchronous scheduling events, is immediately granted.

According to a second embodiment, the synchronous scheduling can also guarantee an average bandwidth for connection-oriented services (e.g., strict priority traffic). This average bandwidth can be defined for example in a SLA (Service Level Agreement) or a TSpec (Traffic Specification) negotiated during the Connection Admission Control (CAC) procedure.

Synchronous and asynchronous scheduling events can occur simultaneously with a very low probability. If this happens, the asynchronous scheduling has priority over the synchronous scheduling.

Per line-card, the separation in time of asynchronous scheduling events (size of the ri) is only lower bounded. A bound of few tens of microseconds guarantees an efficient tracking of the traffic variation at input line-cards and that the maximal matching algorithms can be hardware implemented.

Let us assume that an input-output pair has a mean data rate of 1 cell per microsecond. The synchronous request for bandwidth calls - every 500 µs - for the capacity of 500 cells. The grant mechanism specifies an evenly spaced pattern in time that allows the input to schedule these cells.

When a burst arrives on this data flow, the input queue starts to build up. Above the maximum threshold (e.g., number of bytes in the queue), an asynchronous request is triggered and the corresponding output scheduler grants a sufficient number of additional timeslots to transfer the burst data. Supposing that the incoming flow is leaky-bucket filtered, the burst size and the required buffer space have known limits. Burst transients can be handled with a certain delay. However, this latency is typically several degrees of magnitude less than the end-to-end delay, and much lower than the delay between synchronous scheduling cycles.

In an idle period when no data arrive, the input queue stays empty for a certain amount of time. When this idle period exceeds a time-threshold, the scheduler at an input line card sends a "negative request" to an output line card. The output scheduler then reduces the grants, to the appropriate input, down to a minimum guaranteed bandwidth. The output scheduler (and/or the central scheduler) re-assigns the remaining bandwidth to competing flows.

If several input line cards have simultaneous asynchronous requests to the same output line card, these requests can be stored for example in a FIFO queue..

As far as the Quality of Service (QoS) requirements are concerned, the synchronous bandwidth matching guarantees a maximum latency and a minimum bandwidth for each pair of input and output line-cards. Therefore, the QoS requirements of priority traffic are met. The best-effort (elastic) traffic QoS requirements, in terms of delay and bandwidth, are implicitly guaranteed by the asynchronous scheduling that efficiently tracks the queue state at input line-cards.

Synchronous scheduling can also guarantee that a certain amount of matrix bandwidth is always (continuously) available between all pairs of input and output line-cards. This allows a number of packets to "cut-trough" the switch matrix.

The above description focuses on sharing the output bandwidth among competing input line cards, and thus on the matrix bandwidth contention resolution. Scheduling policies (e.g., strict priority, WFQ) at lower granularities that guarantee isolation and differentiation of individual traffic flows at input and output line-cards can remain unchanged.

The invention has the following advantages:
- Decouples the rate of fabric scheduling from the time-length of the smallest packet crossing the system.
- Permits a significant decrease of the scheduling rate. This feature allows the decrease of the signaling overhead between input and output line-cards and the use of maximal matching algorithms.
- The combination of synchronous and asynchronous scheduling permits the efficient scheduling of constant bit-rate (e.g., circuit-emulation, TDM) and variable bit-rate (e.g., TCP/IP) flows, with the required QoS.
- Allows to switch constant bit rate flows as fast as a TDM cross-connect, if the matrix uses shared-memory architecture, precisely compatible with TDM systems. The variable bit-rate parts of variable packet traffic are fully taken into account through the adaptive asynchronous component of arbitration, by quickly adjusting the more slowly varying parts of synchronous allocation.
- Allows for a "cut-through" packet forwarding.

In the above described embodiment, the hybrid scheduling in accordance with the invention has been described based in a scheduling system with input schedulers, central scheduler and output schedulers. It should be understood that this is just a preferred embodiment but that other implementations for implementing a hybrid scheduling can equally be envisaged by those skilled in the art of packet switching systems. For example, hybrid scheduling can be implemented with a scheduling system of only input schedulers and output schedulers. On the other hand, it is also possible to implement hybrid scheduling with only a central scheduler, provided this central scheduler has information on all virtual output queues of all input line cards and all real output queues of all output line cards.

## Claims

1. A switching node for switching of data packets comprising input line cards (ILC1-ILCn) and output line cards (OLC1-OLCm), each input line card (ILC1-ILCn) having a number of virtual output queues (VOQ1-VOQm) and each output line card (OLC1-OLCm) having a number of real output queues (ROQ1-ROQn), said node further comprising a switch matrix (XM) controllably transferring data entities from the input line cards (ILC1-ILCn) to the output line cards (OLC1 - OLCm) and scheduling means (IS1-ISn, OS1-OSm, CS) for scheduling the transfer of said data packet from the input line cords (ILC1-ILCn) to the output line cards (OLC1-OLCm) through the switch matrix (XM), wherein said scheduling means (IS1-ISn, OS1-OSm, CS) are adapted to
- synchronously send at fixed-length time intervals (Δ) to all input line cards (ILC1-ILCn) grants for transmitting data entities to output line cards (OLC1-OLCm); and
- asynchronously send additional grants to individual input line cards (ILCi) in dependence of a traffic load condition in any of the virtual output queues (VOQ1-VOQm) of the respective input line card (ILCi).

2. A switching node according to claim 1, wherein the scheduling means comprise input schedulers (IS1-ISn) respectively assigned to the various input line cards (ILC1-ILCn) and output schedulers (OS1-OSm), respectively assigned to the various output line cards (OLC1-OLCm) wherein the input schedulers (IS1-ISn) are adapted to synchronously send at a predefined time interval (Δ) requests to the output schedulers (OS1-OSm) and to asynchronously send additional requests in dependence of a traffic load condition in any of the of virtual output queues (VOQ1-VOQm) of the corresponding input line card (ILCi) and wherein the output schedulers (OS1 -OSm) are adapted to send grants as a reaction to requests received.

3. A switching node according to claim 2, wherein the scheduling means further comprise a central scheduler (CS) for intercepting and forwarding or controllably delaying grants sent from the output schedulers (OS1-OSm) to the input schedulers (IS1-ISn) to resolve potential contentions between competing input line cards (IS1-ISn).

4. A switching node according to claim 2, wherein the input schedulers (IS1-ISn) are adapted to send an asynchronous request when the amount of data in any of the virtual output queues (VOQ1-VOQm) of the corresponding input line card (ILCi) exceeds a maximum threshold.

5. A switching node according to claim 1, wherein said input line cards (ILC1-ILCn) comprise means for segmenting received data packets into fixed-length cells and wherein the output line cards (OLC1-OLCm) comprise means for reassembling the data packets from the received cells and wherein the switch matrix (XM) is a time-slot switch and said cells are the data entities switched through the switch matrix (XM).

6. A scheduling method for packet data flows between input line cards (ILCi) and output line cards (OLCi) of a switching node, comprising the steps of
- synchronously sending at a predefined time interval (Δ) to all input line cards (ILC1-ILCn) grants for transmitting data entities to output line cards (OLC1-OLCm); and
- asynchronously sending additional grants to individual input line cards (ILCi) in dependence of a traffic load condition in any of a plurality of queues of the respective input line card (ILCi).

7. A method according to claim 6, wherein asynchronous requests, accidentally coinciding with synchronous requests have priority.

8. A method according to claim 6, comprising the step of requesting additional asynchronous grants when the amount of data in a queue of the respective input line card (ILCi) exceeds a maximum threshold.

9. A method according to claim 8, further comprising the step of requesting to reduce the number of grants when the amount of data in a queue of the respective input line card (ILCi) falls below a minimum threshold.

10. A method according to claim 8, further comprising the step of requesting to reduce the number of grants to a minimum predefined number of grants when a queue of the respective input line card (ILCi) stays empty for longer than a certain time-out threshold.

## Patentansprüche

1. Vermittlungsknoten zum Vermitteln von Datenpaketen, umfassend Eingangsleitungskarten (ILC1-ILCn) und Ausgangsleitungskarten (OLC1-OLCm), wobei jede Eingangsleitungskarte (ILC1-ILCn) eine Anzahl von virtuellen Ausgangswarteschlangen (VOQ1-VOQm) und jede Ausgangsleitungskarte (OLC1-OLCm) eine Anzahl von realen Ausgangswarteschlangen (ROQ1-ROQn) aufweist, wobei der besagte Knoten weiterhin eine Schaltmatrix (XM), welche die Datensätze gesteuert von den Eingangsleitungskarten (ILC1-ILCn) an die Ausgangsleitungskarten (OLC1-OLCm) überträgt, sowie Zeitplanungsmittel (IS1-Isn, OS1-OSm, CS) zum zeitlichen Planen der Übertragung der besagten Datenpakete von den Eingangsleitungskarten (ILC1-ILCn) an die Ausgangsleitungskarten (OLC1-OLCm) über die Schaltmatrix (XM) umfasst, wobei die besagten Zeitplanungsmittel (IS1-ISn, OS1-OSm, CS) ausgelegt sind für
- das synchrone Senden, in Zeitintervallen mit festgelegter Länge (Δ), von Zuteilungen an alle Eingangsleitungskarten (ILC1-ILCn) für die Übertragung von Datensätzen an Ausgangsleitungskarten (OLC1-OLCm); und
- das asynchrone Senden von zusätzlichen Zuteilungen an individuelle Eingangsleitungskarten (ILCi) in Abhängigkeit eines Verkehrsbelastungszustands in einer beliebigen der virtuellen Ausgangswarteschlangen (VOQ1-VOQm) der jeweiligen Eingangsleitungskarte (ILCi).

2. Vermittlungsknoten nach Anspruch 1, wobei die Zeitplanungsmittel Eingangsplaner (IS1-ISn), welche jeweils den verschiedenen Eingangsleitungskarten (ILC1-ILCn) zugeordnet sind, und Ausgangsplaner (OS1-OSm), welche jeweils den verschiedenen Ausgangsleitungskarten (OLC1 -OLCm) zugeordnet sind, umfassen, wobei die Eingangsplaner (IS1-ISn) dazu ausgelegt sind, synchron in vorbestimmten Zeitintervallen (Δ) Anforderungen an die Ausgangsplaner (OS1-OSm) und asynchron zusätzliche Anforderungen in Abhängigkeit eines Verkehrsbelastungszustands in einer beliebigen der virtuellen Ausgangswarteschlangen (VOQ1-VOQm) der entsprechenden Eingangsleitungskarte (ILCi) zu senden, und wobei die Ausgangsplaner (OS1-OSm) dazu ausgelegt sind, Zuteilungen als eine Reaktion auf die empfangenen Anforderungen zu senden.

3. Vermittlungsknoten nach Anspruch 2, wobei die Zeitplanungsmittel weiterhin einen zentralen Planer (CS) umfassen, um von den Ausgangsplanern (OS1-OSm) an die Eingangsplaner (IS1-ISn) gesendete Zuteilungen abzufangen und weiterzuleiten oder gesteuert zu verzögern, um eventuelle Konflikte zwischen konkurrierenden Eingangsleitungskarten (IS1-1Sn) zu beheben.

4. Vermittlungsknoten nach Anspruch 2, wobei die Eingangsplaner (IS1-ISn) dazu ausgelegt sind, eine asynchrone Anforderung zu senden, wenn die Menge der Daten in einer beliebigen der virtuellen Ausgangswarteschlagen (VOQ1-VOQm) der entsprechenden Eingangsleitungskarte (ILCi) einen maximalen Grenzwert überschreitet.

5. Vermittlungsknoten nach Anspruch 1, wobei die besagten Eingangsleitungskarten (ILC1-ILCn) Mittel zum Aufteilen der empfangenen Datenpakete in Zellen mit festgelegter Länge umfassen, und wobei die Ausgangsleitungskarten (OLC1-OLCm) Mittel zum erneuten Zusammensetzen der Datenpakete aus den empfangenen Zellen umfassen, und wobei die Schaltmatrix (XM) ein Zeitschlitz-Schalter ist und die besagten Zellen die über die Schaltmatrix (XM) vermittelten Datensätze sind.

6. Zeitplanungsverfahren für Paketdatenflüsse zwischen Eingangsleitungskarten (ILCi) und Ausgangsleitungskarten (OLCj) eines Vermittlungsknotens, umfassend die folgenden Schritte:
- Synchrones Senden, in einem Zeitintervall mit festgelegter Länge (Δ), von Zuteilungen an alle Eingangsleitungskarten (ILC1-ILCn) für die Übertragung von Datensätzen an Ausgangsleitungskarten (OLC1-OLCm); und
- asynchrones Senden von zusätzlichen Zuteilungen an individuelle Eingangsleitungskarten (ILCi) in Abhängigkeit eines Verkehrsbelastungszustands in einer beliebigen einer Mehrzahl von Warteschlangen der jeweiligen Eingangsleitungskarte (ILCi).

7. Verfahren nach Anspruch 6, wobei asynchrone Anforderungen, welche zufällig mit synchronen Anforderungen übereinstimmen, Priorität haben.

8. Verfahren nach Anspruch 6, umfassend den Schritt des Anforderns von zusätzlichen asynchronen Zuteilungen, wenn die Menge von Daten in einer Warteschlange der jeweiligen Eingangsleitungskarte (ILCi) einen maximalen Grenzwert überschreitet.

9. Verfahren nach Anspruch 8, weiterhin umfassend den Schritt des Anforderns einer Reduzierung der Anzahl von Zuteilungen, wenn die Menge der Daten in einer Warteschlange der jeweiligen Eingangsleitungskarte (ILCi) einen minimalen Grenzwert unterschreitet.

10. Verfahren nach Anspruch 8, weiterhin umfassend den Schritt des Anforderns einer Reduzierung der Anzahl von Zuteilungen auf eine vorbestimmte Mindestanzahl von Zuteilungen, wenn eine Warteschlange der jeweiligen Eingangsleitungskarte (ILCi) für länger als ein bestimmter Zeitüberschreitungsgrenzwert leer bleibt.

## Revendications

1. Noeud de commutation pour commuter des paquets de données comprenant des cartes de lignes d'entrée (ILC1-ILCn) et des cartes de lignes de sortie (OLC1-OLCm), chaque carte de lignes d'entrée (ILC1-ILCn) présentant plusieurs files d'attente de sortie virtuelles (VOQ1-VOQm) et chaque carte de lignes de sortie (OLC1-OLCm) présentant plusieurs files d'attente de sortie réelles (ROQ1-ROQn), ledit noeud comprenant en outre une matrice de commutation (XM) transférant de manière contrôlable des entités de données entre les cartes de lignes d'entrée (ILC1-ILCn) et les cartes de lignes de sortie (OLC1-OLCm) et des moyens de planification (IS1-ISn, OS1-OSm, CS) pour planifier le transfert dudit paquet de données entre les cartes de lignes d'entrée (ILC1-ILCn) et les cartes de lignes de sortie (OLC1-OLCm) à travers la matrice de commutation (XM), dans lequel lesdits moyens de planification (IS1-ISn, OS1-OSm, CS) sont adaptés pour
- envoyer de manière synchrone à intervalles temporels fixes (Δ) à toutes les cartes de lignes d'entrée (ILC1-ILCn) des autorisations à transmettre des entités de données à des cartes de lignes de sortie (OLC1-OLCm) ; et
- envoyer de manière asynchrone des autorisations supplémentaires à chaque carte de lignes d'entrée (ILCi) selon une condition de charge de trafic dans l'une quelconque des files d'attente de sortie virtuelles (VOQ1-VOQm) de la carte de lignes d'entrée (ILCi) respective.

2. Noeud de commutation selon la revendication 1, dans lequel les moyens de planification comprennent des dispositifs de planification d'entrée (IS1-ISn) respectivement attribués aux différentes cartes de lignes d'entrée (ILC1-ILCn) et des dispositifs de planification de sortie (OS1-OSm), respectivement attribués aux différentes cartes de lignes de sortie (OLC1-OLCm) dans lequel les dispositifs de planification d'entrée (IS1-ISn) sont adaptés pour envoyer de manière synchrone à un intervalle temporel prédéfini (Δ) des demandes aux dispositifs de planification de sortie (OS1-OSm) et pour envoyer de manière asynchrone des demandes supplémentaires selon une condition de charge de trafic dans l'une quelconque des files d'attente de sortie virtuelles (VOQ1-VOQm) de la carte de lignes d'entrée (ILCi) correspondante et dans lequel les dispositifs de planification de sortie (OS1-OSm) sont adaptés pour envoyer des autorisations en réponse à des demandes reçues.

3. Noeud de commutation selon la revendication 2, dans lequel les moyens de planification comprennent en outre un dispositif de planification central (CS) pour intercepter et transmettre ou retarder de manière contrôlable des autorisations envoyées depuis les dispositifs de planification de sortie (OS1-OSm) vers les dispositifs de planification d'entrée (IS1-ISn) pour résoudre des conflits potentiels entre des cartes de lignes d'entrée (IS1-ISn) en concurrence.

4. Noeud de commutation selon la revendication 2, dans lequel les dispositifs de planification d'entrée (IS1-ISn) sont adaptés pour envoyer une demande asynchrone lorsque la quantité de données dans l'une quelconque des files d'attente de sortie virtuelles (VOQ1-VOQm) de la carte de lignes de sortie (ILCi) correspondante dépasse un seuil maximum.

5. Noeud de commutation selon la revendication 1, dans lequel lesdites cartes de lignes d'entrée (ILC1-ILCn) comprennent des moyens pour segmenter des paquets de données reçus en cellules de longueur fixe et dans lequel les cartes de lignes de sortie (OLC1-OLCm) comprennent des moyens pour ré-assembler les paquets de données à partir des cellules reçues et dans lequel la matrice de commutation (XM) est un commutateur à créneau temporel et lesdites cellules sont les entités de données commutées à travers la matrice de commutation (XM).

6. Procédé de planification pour des flux de données en paquets entre des cartes de lignes d'entrée (ILCi) et des cartes de lignes de sortie (OLCi) d'un noeud de commutation, comprenant les étapes suivantes
- envoyer de manière synchrone à un intervalle temporel prédéfini (Δ) à toutes les cartes de lignes d'entrée (ILC1-ILCn) des autorisations à transmettre des entités de données à des cartes de lignes de sortie (OLC1-OLCm) ; et
- envoyer de manière asynchrone des autorisations supplémentaires à chaque carte de lignes d'entrée (ILCi) selon une condition de charge de trafic dans l'une quelconque parmi une pluralité de files d'attente de la carte de lignes d'entrée (ILCi) respective.

7. Procédé selon la revendication 6, dans lequel des demandes asynchrones, coïncidant accidentellement avec des demandes synchrones, sont prioritaires.

8. Procédé selon la revendication 6, comprenant l'étape de demande d'autorisations asynchrones supplémentaires lorsque la quantité de données dans une file d'attente de la carte de lignes d'entrée (ILCi) respective dépasse un seuil maximum.

9. Procédé selon la revendication 8, comprenant en outre l'étape de demande de réduction du nombre d'autorisations lorsque la quantité de données dans une file d'attente de la carte de lignes d'entrée (ILCi) respective devient inférieure à un seuil minimum.

10. Procédé selon la revendication 8, comprenant en outre l'étape de demande de réduction du nombre d'autorisations à un nombre prédéfini minimum d'autorisations lorsqu'une file d'attente de la carte de lignes d'entrée (ILCi) respective reste vide pendant une durée supérieure à un seuil de temporisation.
